# EUROPÄISCHE PATENTSCHRIFT

(11) **EP 2 708 397 B1**
(45) Veröffentlichungstag und Bekanntmachung des Hinweises auf die Patenterteilung: **18.11.2015**
(21) Anmeldenummer: 13183737.9
(22) Anmeldetag: 10.09.2013
(51) Int. Cl.: B60J 7/06, B65D 88/12

(54) **Zwangsgeführter Klappspriegel**
Positively guided folding bow
Arceau rabattable à guidage forcé

(30) Priorität: 12.09.2012 DE 102012216151
(43) Veröffentlichungstag der Anmeldung: 19.03.2014
(73) Patentinhaber: Franz Xaver Meiller Fahrzeug- und Maschinenfabrik-GmbH & Co KG, 80997 München (DE)
(72) Erfinder: Riedl, Stefan, 80992 München (DE)
(74) Vertreter: Weickmann & Weickmann

(56) Entgegenhaltungen:
- WO-A1-2010/053224
- US-A1- 2008 302 404

## Beschreibung

Die vorliegende Erfindung betrifft eine Verdeckvorrichtung für einen Lastentransportbehälter eines Lastentransportfahrzeugs, der einen von einer Heckbordwand und von Seitenbordwänden begrenzten Laderaum aufweist, wobei wenigstens eine dieser Bordwände um eine normalerweise horizontale Schwenkachse aus einer Verschlussstellung heraus nach außen in eine Öffnungsstellung verschwenkbar ist, umfassend eine Verdeckplane und eine Betätigungsvorrichtung für die Verdeckplane, wobei im bestimmungsgemäß und funktionsfertig am Lastentransportbehälter montierten Zustand der Verdeckvorrichtung die Verdeckplane mittels der Betätigungsvorrichtung zwischen einer ausgebreiteten Abdeckstellung und einer gerafften Einzugsstellung am Lastentransportbehälter bewegbar ist, so dass sie in der ausgebreiteten Abdeckstellung den Laderaum des Lastentransportbehälters an dessen Oberseite abdeckt und in der gerafften Einzugsstellung an einer Einzugsseite des Lastentransportbehälters in einer den Laderaum an dessen Oberseite freigebenden Weise aufbewahrt ist, wobei die Betätigungsvorrichtung nebeneinander liegend verschiebbar an dem Lastentransportbehälter angeordnete und mit der Verdeckplane verbundene Stützbügel für die Verdeckplane aufweist, die an ihren entgegengesetzten Enden Führungselemente zu ihrer Führung an den oberen Rändern und in Längsrichtung der Seitenbordwände des Lastentransportbehälters haben, wobei die Stützbügel in Längsrichtung der Seitenbordwände einander angenähert in einer Sammelstellung an der Einzugseite des Lastentransportbehälters zusammengeführt sind, wenn die Verdeckplane in der Einzugstellung ist, wohingegen die Stützbügel auseinandergezogen und mit größeren Abständen voneinander an der Oberseite des Lastentransportbehälters in Längsrichtung der Seitenbordwände verteilt sind, wenn die Verdeckplane in ihrer ausgebreiteten Abdeckstellung ist, wobei die Betätigungsvorrichtung einen ebenfalls mit der Verdeckplane verbundenen Klappbügel umfasst, welcher im Bereich der Führungselemente des der Heckbordwand am nächsten liegenden ersten Stützbügels abgestützt ist und relativ zu diesem Stützbügel um eine zur Längsrichtung der Seitenbordwände im Wesentlichen orthogonale und normalerweise horizontale Klappachse beweglich ist zwischen einer hochgeklappten und einer heruntergeklappten Stellung, wobei sich der Klappbügel in ausgebreiteter Abdeckstellung der Verdeckplane in seiner heruntergeklappten Stellung befindet und einem oberen Rand der Heckbordwand angenähert ist oder auf dieser aufliegt und die Verdeckvorrichtung eine starre Anschlageinrichtung für eine Herunterklappbewegung des Klappbügels aufweist, wobei die Anschlageinrichtung unmittelbar oder über Zwischenelemente mit einer Heckbordwand oder Seitenbordwand verbunden ist, und wobei eine Bewegung des Klappbügels entlang der Führung in Richtung der ausgebreiteten Abdeckstellung die Anschlageinrichtung durch Anschlagskrafteinleitung in den Klappbügel ein zwangsgeführtes Herunterklappen des Klappbügels bewirkt, wobei das Herunterklappen starr mit der Bewegung des Klappbügels entlang der Führung gekoppelt ist. Außerdem betrifft die vorliegende Erfindung einen Lastentransportbehälter und ein Lastentransportfahrzeug.

Im Stand der Technik sind Verdeckvorrichtungen für Lastentransportbehälter, insbesondere für offene Kippbrücken bekannt, beispielsweise aus der US 7,549,695. Hier ist ein Mechanismus mit Stützbügeln für eine Verdeckplane beschrieben, mit dessen Hilfe eine Verdeckplane über eine Kippbrücke ausgebreitet werden kann.

Einen weiteren Mechanismus für denselben Zweck beschreibt die US 4,740,029. In dieser Patentschrift wird außerdem ein Klappbügel vorgeschlagen, um eine Verdeckplane über das Ende des abzudeckenden Transportbehälters hinaus nach unten zu ziehen und damit die Oberkante einer Heckbordwand möglichst dicht abzuschließen. Der Klappbügel wird dabei mit Bedienungsleinen von Hand nach unten gezogen. Nachteilig an dieser Verdeckvorrichtung ist, dass das Abschließen mit dem Klappbügel eine manuelle Bedienung erfordert.

Weiter offenbart die US-Patentschrift 5,524,953 einen Mechanismus, mit dem ein offener Transportbehälter mit einer Plane abgedeckt werden kann.
Es wird ein System mit Stützbügeln vorgeschlagen, bei dem Führungselemente an den Enden der Stützbügel entlang einer Führung an der Oberkante der Längsseiten des Transportbehälters laufen und jeweils zwei Stützbügel tragen. An dem am weitesten in Richtung der Heckbordwand angeordneten Führungselement ist der hintere Bügel als Klappbügel ausgestaltet, der in Richtung der Heckbordwand heruntergeklappt werden kann. Dazu ist ein Klappmechanismus vorgesehen, der den Klappbügel verriegelt, während die Stützbügel entlang der Führung bewegt werden. Erst wenn die Führungselemente mit dem Klappbügel das hintere Ende des Lastentransportbehälters erreichen, wird der Klappbügel durch Auflaufen des Führungselements an einen Anschlag entriegelt. Daraufhin wird die Betätigungsvorrichtung zum Ausbreiten der Verdeckplane weiter betätigt. Durch einen Mechanismus, der mit den Betätigungsseilen des Ausbreitungsmechanismus verbunden ist, wird der Klappbügel heruntergeklappt, während dessen Führungselemente weiter an dem Anschlag anstehen. Nachteilig an dieser Konstruktion ist, dass sie aufwendig ist, viele speziell geformte Teile erfordert und durch ihre Kompliziertheit auch störungsanfällig ist.

Weiter ist aus US 2008/0302404 A1 eine gattungsgemäße Verdeckvorrichtung für einen Lastentransportbehälter bekannt.
Die Verdeckvorrichtung umfasst neben den Stützbügeln, der Verdeckplane, den Führungselementen sowie einer Antriebsvorrichtung auch einen Klappbügel, welcher mit einer Hebeleinrichtung verbunden ist, wobei die Hebeleinrichtung über einen Drehstift verfügt, der entlang einer Nockenrampe zwangsgeführt wird, um den Klappbügel bei Bewegung in Richtung einer ausgebreiteten Abdeckstellung zu verschwenken.

Als weiterer Stand der Technik ist das Dokument WO 2010/053224 A1 bekannt.
Darin wird eine Verdeckvorrichtung beschrieben, die eine Verdeckplane über einen Lastentransportbehälter ausbreiten kann.
Die Führungselemente dieser Verdeckplane und der zugehörigen Stützbügel sind mit Rollen und Seildurchführungsabschnitten ausgestattet. Zu der Verdeckvorrichtung gehört auch ein Klappbügel, der über eine Drehhebeleinrichtung verfügt, welche in Richtung einer ausgebreiteten Abdeckstellung an einen Anschlag aufläuft, so dass der Klappbügel in eine Drehbewegung gezwungen wird.

Weiter ist die DE 10 2010 003 932 A1 bekannt, in der ebenfalls eine Verdeckvorrichtung mit einem Klappbügel offenbart ist. In der DE 10 2010 003 932 A1 wird vorgeschlagen, das Herunterklappen eines am Ende einer Verdeckplane angeordneten Klappbügels dadurch zu bewirken, dass ein mit dem Klappbügel verbundener Hebel über eine Feder mit dem nächsten Führungselement in Richtung der Vorderseite des abzudeckenden Transportbehälters verbunden ist. Während des Ausbreitens der Verdeckplane bleibt die Feder zunächst ungespannt, wodurch der Klappbügel in aufgeklappter Stellung ist. Wird gegen Ende des Ausbreitungsvorgangs der Abstand zwischen dem Führungselement, an dem das Federelement befestigt ist, und dem Hebel des Klappbügels immer größer, so beginnt sich die Feder zu spannen und den Klappbügel herunterzuklappen. Am Ende des Ausbreitungsvorgangs liegt der Klappbügel auf der Heckbordwand des Transportbehälters auf. Durch die Federwirkung des Federelements kann der Klappbügel elastisch hochgeklappt werden, was beispielsweise bei einer Bewegung der Heckbordwand mit einer Aufwärtskomponente vorteilhaft ist, weil der Klappbügel weich nach oben ausweichen kann. Nachteilig an dieser Konstruktion ist jedoch, dass der heruntergeklappte Klappbügel mit der Verdeckplane zum Schwingen oder Flattern neigt, insbesondere beim Überfahren von Bodenunebenheiten oder durch Sog und Wirbelablösung bei höheren Geschwindigkeiten, wodurch Geräusche verursacht werden und Verdeckplane und Klappbügel vorzeitig verschleißen können. Der in der DE 10 2010 003 932 A1 beschriebene Ausbreitungsmechanismus für die Verdeckplane sowie die Anordnung des Klappbügels an einem Führungselement und die Klappachse des Klappbügels können für die vorliegende Erfindung übernommen werden.

Aufgabe der vorliegenden Erfindung ist es eine unkompliziert aufgebaute und zuverlässig funktionierende Verdeckvorrichtung mit einfacher Bedienung zu schaffen, die einen Transportbehälter geräusch- und verschleißarm abdecken kann.

Gegenstand der vorliegenden Erfindung ist eine Verdeckvorrichtung der eingangs genannten Art, wobei die erfindungsgemäße Verdeckvorrichtung dadurch gekennzeichnet ist, dass die starre Anschlageinrichtung eine Anschlagstange umfasst, die Anschlagstange entlang einer Anschlagstangenführung geführt ist, mittels der die Anschlagstange zu einer Anschlagstelle führbar ist, und die Anschlagstangenführung ein Element der Betätigungvorrichtung für die Verdeckplane umfasst.

Eine solche Verdeckvorrichtung ermöglicht, dass der Klappbügel mit der Verdeckplane unnachgiebig auf der Heckbordwand aufliegt, was Schwingungen des Klappbügels und somit entsprechende Geräusche und Verschleiß verhindert. Die Wirkung einer mit der Bordwand verbundenen Anschlageinrichtung ist, dass während eines Teils des Ausbreitungsvorgangs der Verdeckplane über den Transportbehälter der Anschlag nicht in Eingriff ist und somit der Klappbügel nicht betätigt wird. Erst beim Ineingrifftreten des Anschlags bewirkt die Anschlageinrichtung ein Herunterklappen des Klappbügels. Die Energie, die für die Bewegung des Klappbügels erforderlich ist, wird der Abdeckbewegung und somit deren Antriebsvorrichtung entnommen, indem diese Energie über die Anschlageinrichtung in die Klappbewegung umgelenkt wird. Die Zwangsführung muss dabei eine stärkere Herunterklappbewegung als durch die Zwangsführung vorgegeben nicht verhindern. Sie verhindert jedoch in jedem Fall eine der Zwangsführung entgegengerichtete Bewegung des Klappbügels in Aufwärtsrichtung. Der Begriff starr bedeutet hinsichtlich diese Erfindung keine völlige Starrheit, da alle Elemente eine unvermeidliche Restelastizität aufweisen. Starr bedeutet jedoch, dass in dem Kraftschluss über die Anschlageinrichtung kein explizit vorgesehenes Federelement vorhanden ist, dessen Steifigkeit gezielt abgesenkt ist, um den Kraftübertragungsweg über das Anschlagelement weicher zu gestalten. Ausgenommen hiervon sind absichtlich nachgiebige Elemente oder Abschnitte, beispielsweise zur Schlagdämpfung oder dergleichen, wie etwa eine Lagerhülse aus Kunststoff, die nur einen vernachlässigbar kleinen elastischen Weg des Klappbügels ermöglichen. Der Begriff starr in Bezug auf die Art der Zwangsführung ist mit der Starrheit der Anschlageinrichtung gekoppelt und führt nur zu einer Nachgiebigkeit im Rahmen der unvermeidlichen Elastizität der damit verbundenen Bauteile. Da die Anschlageinrichtung mit der Bordwand unmittelbar oder über Zwischenelemente verbunden ist, nutzt die Anschlageinrichtung die Relativgeschwindigkeit zwischen der Ausbreitungsbewegung der Verdeckplane und der Bordwand, um Anschlagskräfte zu erzeugen und in den Klappbügel einzuleiten. Dieser Vorgang setzt sich bevorzugt über die gesamte Herunterklappbewegung des Klappbügels fort. Die Anschlageinrichtung befindet sich vorzugsweise an einer Seitenwand des Transportbehälters.

In einer Ausführungsform der Verdeckvorrichtung leitet die starre Anschlageinrichtung Anschlagkräfte in eine Hebeleinrichtung des Klappbügels ein, die der Verdeckplane in Bezug auf die Klappachse des Klappbügels abgewandt ist. Da sich der Klappbügel beim Ausbreiten der Verdeckplane in Richtung der Heckbordwand bewegt, ist es vorteilhaft, die Relativbewegung zwischen dem Klappbügel und der Bordwand über einen Hebel zur Umkehr der Drehrichtung beim Auflaufen auf einen Anschlag zu nutzen. Würde ein Anschlagelement Kräfte aus der Relativbewegung direkt in den Klappbügel einleiten, so würde sich der Klappbügel durch eine Bewegung der Verdeckplane in Richtung der Frontbordwand herunterklappen, was die beabsichtigte vollständige Abdeckung des Transportbehälters schwieriger realisierbar macht. Daher ist das Verwenden eines Hebels und das Einleiten der Anschlagskräfte in diesen vorteilhaft. Die Hebeleinrichtung kann ein Abschnitt des Klappbügels oder ein zusätzlich angebrachtes und damit verdrehfest verbundenes Element sein. Vorzugsweise verläuft die Klappachse durch die Hebeleinrichtung.

Bei der erfindungsgemäßen Verdeckvorrichtung umfasst die starre Anschlageinrichtung eine Anschlagstange. Eine solche Anschlagstange bildet vorzugsweise ein Zwischenelement zwischen einem Anschlag an einer Bordwand oder einem oder mehreren damit verbundenen Zwischenelementen und der Hebeleinrichtung des Klappbügels und verbindet diese. Diese Verbindung und somit die Anschlagwirkung liegt jedoch nicht bei jedem Ausmaß der Ausbreitung der Verdeckplane vor, in jedem Fall jedoch während des Herunterklappens des Klappbügels. Der Vorteil der Anschlagstange während der Anschlagwirkung ist, dass kein Abgleiten entlang einer Längsführung stattfindet, sondern sich zwischen den Enden der Anschlagstange und den damit verbundenen Elementen Gelenkstellen ergeben, in denen eine Drehbewegung vorliegt, die als quasi punktuelles Abgleiten stattfinden kann. Dadurch, dass ein solches punktuelles Rotationsabgleiten auf einem kleineren Raum stattfindet, können die Gleitflächen vorteilhaft kleiner gestaltet werden. Vorzugsweise ist die Anschlagstange mit der Hebeleinrichtung dauerhaft gelenkig verbunden. In diesem Fall findet das Anlaufen des Anschlags zwischen der Anschlageinrichtung an der Bordwand und der Anschlagstange statt. In einer alternativen Ausführungsform ist es auch möglich, die Anschlagstange dauerhaft mit der Bordwand zu verbinden und die Anschlagstelle zwischen der Anschlagstange und der Hebeleinrichtung vorzusehen.

Bevorzugt kann die Anschlagstange als Druckstange ausgebildet sein. In diesem Fall ist die Anschlageinrichtung an der Bordwand, mit dem die Anschlagstange zusammenwirkt, in Bezug auf die Position der Klappachse des Klappbügels beim Ineingrifftreten des Anschlags weiter in Richtung der Heckbordwand des Transportbehälters angeordnet. Das Anlaufen und das Einsetzen der Anschlagwirkung führt in diesem Fall zu einer Druckbelastung der Anschlagstange. Alternativ kann die Anschlagstange als Zugstange ausgeführt sein. Der Anschlag kann dann beispielsweise ein Fangelement wie etwa einen Haken umfassen, in den ein entsprechendes Gegenstück an der Hebeleinrichtung des Klappbügels eingreift, oder in einem vergleichbaren Mechanismus bestehen, um die Anschlagwirkung zu erzielen. Eine Anschlageinrichtung an der Bordwand für eine solche Anschlagstange ist bevorzugt weiter in Richtung der Bordwand an der Frontseite als die Klappachse beim Einsetzen der Anschlagwirkung angeodnet. Die Zugstange überträgt dann Zugkräfte von der Hebeleinrichtung auf die Anschlageinrichtung.

Bei der Verdeckvorrichtung ist die Anschlagstange entlang einer Anschlagstangenführung geführt, mittels der die Anschlagstange zu einer Anschlagstelle führbar ist. Da die Anschlagstange bevorzugt an ihren beiden Enden gelenkig verbunden sein kann, um Querbewegungen der Anschlagstange bei der Klappbewegung des Klappbügels auszugleichen, ist es möglich, dass die Anschlagstange ohne eine Anschlagstangenführung beim Ausbreiten des Verdecks die Anschlageinrichtung an der Bordwand nicht treffen würde. Bevorzugt verläuft die Anschlagstangenführung im Wesentlichen in Ausbreitungsrichtung der Verdeckplane. Besonders bevorzugt ist die Anschlagstange während des gesamten Ausbreitungsvorgangs der Verdeckplane an der Anschlagstangenführung geführt.

Die Anschlagstangenführung umfasst ein Element der Betätigungsvorrichtung für die Verdeckplane, insbesondere ein Betätigungsseil. Auf diese Weise kann das Betätigungsseil doppelt genutzt werden und es ist keine besondere zusätzliche Anschlagstangenführung erforderlich. Als Führungselement in der Anschlagstange ist bevorzugt ein Loch in dieser vorgesehen, durch die das Betätigungsseil verläuft. Das Loch ist bevorzugt an einem Ende der Anschlagstange vorgesehen. Alternativ zur Nutzung eines Betätigungsseils kann eine andere vorhandene Führung, beispielsweise die Führung der Führungselemente, als Anschlagstangenführung mitgenutzt werden.

In einer Ausführungsform der Verdeckvorrichtung weist diese ein Federelement auf, das den Klappbügel in seine hochgeklappte Stellung drängt. Dieses Federelement ist erforderlich, wenn die Anschlageinrichtung eine einseitige Zwangsführung bewirkt, die nur in Richtung des Schließens des Klappbügels wirksam ist. Der Klappbügel könnte sonst nicht ohne Weiteres wieder hochgeklappt werden. Dabei bewirkt das Federelement auch, dass die Federkräfte von dem Klappbügel über die Anschlageinrichtung übertragen werden. Bevorzugt ist das Federelement eine als Zug- oder Druckfeder ausgestaltete Schraubenfeder, die zwischen dem Führungselement des Klappbügels und dem Klappbügel vorgesehen ist. Alternativ oder zusätzlich können auch Schenkelfedern, Torsionsfeder oder dgl. zum Einsatz kommen.

Ein weiterer Aspekt der vorliegenden Erfindung betrifft einen Lastentransportbehälter mit einer Verdeckvorrichtung nach einer der vorgenannten Ausführungsformen. Insbesondere kann ein solcher Lastentransportbehälter eine Pritsche mit Bordwänden, eine Kippbrücke, insbesondere für einen Hinterkipper, besonders in einer Ausführungsform als Halfpipe sein.

In einer Ausführungsform des Lastentransportbehälters ist eine Verdeckvorrichtung mit zwei starren Anschlageinrichtungen für eine Herunterklappbewegung des Klappbügels an zwei einander gegenüberliegenden Seiten, insbesondere an den Seitenbordwänden, des Transportbehälters angeordnet. Eine solche symmetrische Anordnung vermeidet die Übertragung von Anschlagkräften über den Klappbügel. Außerdem sind die Kräfte in der Anschlageinrichtung kleiner, so dass sich insgesamt eine leichtere Konstruktion ergibt.

In einem weiteren Aspekt der Erfindung wird ein Lastentransportfahrzeug mit einer Verdeckvorrichtung gemäß einer der vorbeschriebenen Ausführungsformen oder mit einem Lastentransportbehälter nach dem vorangehenden Aspekt vorgeschlagen.

Im Folgenden wird die Erfindung anhand von Figuren im Anhang beispielhaft beschrieben, in denen:
- Fig. 1: eine gattungsgemäße, nicht zur Erfindung gehörende Verdeckvorrichtung zur allgemeinen Erläuterung der Funktionsweise von Verdeckvorrichtungen zeigt,
- Fig. 2: eine Ausführungsform der vorliegenden Erfindung in einer Stellung ohne Anschlagwirkung in einer Ansicht eines Ausbruchs einer Seitenbordwand zeigt,
- Fig. 3: die Ausführungsform nach Fig. 2 in einer Stellung bei einsetzender Anschlagwirkung in einer Ansicht zeigt eines Ausbruchs einer Seitenbordwand und
- Fig. 4: die Ausführungsform nach Fig. 2 und Fig. 3 in einer Stellung mit vollständig heruntergeklapptem Klappbügel in einer Ansicht eines Ausbruchs einer Seitenbordwand in einer Ansicht zeigt.

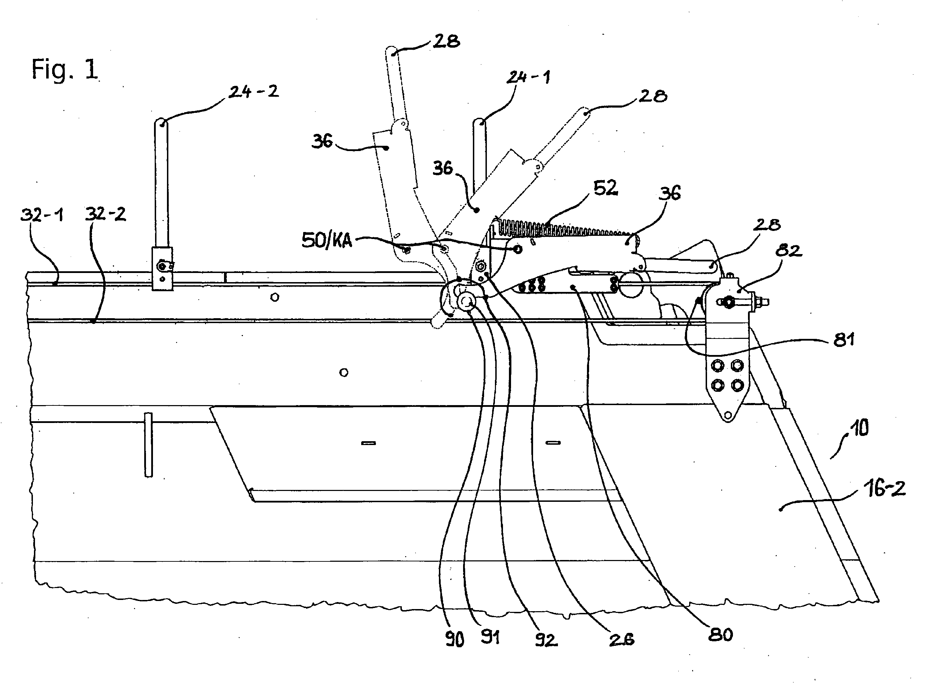

Fig. 1 zeigt in einer Ansicht eine gattungsgemäße Verdeckvorrichtung, die nicht Gegenstand der Erfindung ist, jedoch zur Erläuterung von Verdeckfunktionen dient. In Fig. 1 sind drei verschiedene Stellungen des Klappbügels 28 zugleich gezeigt. Der Klappbügel 28, die Hebeleinrichtung 36 und das Drehlager 50 bzw. die Klappachse KA sind in der Fig. 1 dreifach dargestellt. Die Hebeleinrichtung 36 ist jeweils um das Drehlager 50, das die Klappachse KA definiert, drehbar gelagert und trägt an seinem von dem Transportbehälter 10 weggerichteten Ende den Klappbügel 28, der an der Hebeleinrichtung verdrehfest befestigt ist. Die ganz links in der Fig. 1 gezeigte Stellung zeigt den Klappbügel 28 in einer hochgeklappten Stellung. In dieser Stellung beginnt die Anschlagwirkung zwischen einer Gleitfläche 92 der Hebeleinrichtung 36 und einem Anschlagstift 91, der mit einer Seitenbordwand 16-2 des Transportbehälters 10 verbunden ist. Der Bund 90 am Ende des Stifts 91 verhindert ein Abrutschen der Hebeleinrichtung von dem Stift 91. Die Gleitfläche 92 ist an einem Abschnitt der Hebeleinrichtung 36 angeordnet, die in Bezug auf die Klappachse KA dem Klappbügel 28 gegenüberliegt. Dadurch wird die Hebeleinrichtung 36 und der Klappbügel 28 in Richtung des Uhrzeigersinns gedreht, wenn der Klappbügel durch die Betätigungseinrichtung in Richtung der ausgebreiteten Stellung des nicht dargestellten Verdecks bewegt wird. In der Fig. 1 ist die Heckbordwand auf der rechten Seite der Figur angeordnet, so dass die genannte Bewegung nach rechts erfolgt. Die Bewegung wird durch die Betätigungseinrichtung bewirkt, die die Betätigungsseile 32-1 und 32-2 umfasst, die über die Umlenkrolle 81 und den Umlenkrollenhalter 82 an dem Transportbehälter 10 befestigt sind. Der Umlenkrollenhalter 82 ist an der Seitenbordwand 16-2 befestigt. Das Betätigungsseil 32-1 ist außerdem an der Klemmvorrichtung 80 befestigt, die deren Bewegung über das Führungselement 26 auf das Drehlager 50 und somit auf die Hebeleinrichtung 36 und den Klappbügel 28 überträgt. Mit der Bewegung der Betätigungsseile 32-1 und 32-2 bewegt sich auch ein an dem Führungselement 26 befestigter nichtklappbarer Stützbügel 24-1. Bei fortgesetzter Bewegung der Betätigungsvorrichtung in Abdeckstellung des Verdecks geht der Klappbügel 28 von der links in Fig. 1 dargestellten Position in die mittlere dargestellte Position über und von dieser Stellung weiter in eine vollständig heruntergeklappte, in Fig. 1 rechts dargestellte Position des Klappbügels 28 über. Die Gleitfläche 92 bleibt während des gesamten Vorgangs in Eingriff mit dem Anschlagstift 91. Die Verdeckvorrichtung weist weiter eine Zugfeder 52 auf, die zwischen dem Führungselement 26 und der Hebeleinrichtung 36 angeordnet ist. Diese Feder wird verlängert, wenn der Klappbügel 28 heruntergeklappt wird. Dadurch bewirkt die Feder 52, dass der Klappbügel eine Vorspannung in Richtung seiner hochgeklappten Stellung erfährt. Die Feder 52 ist vorzugsweise als Schraubenfeder, besonders bevorzugt als Zugfeder, ausgeführt.

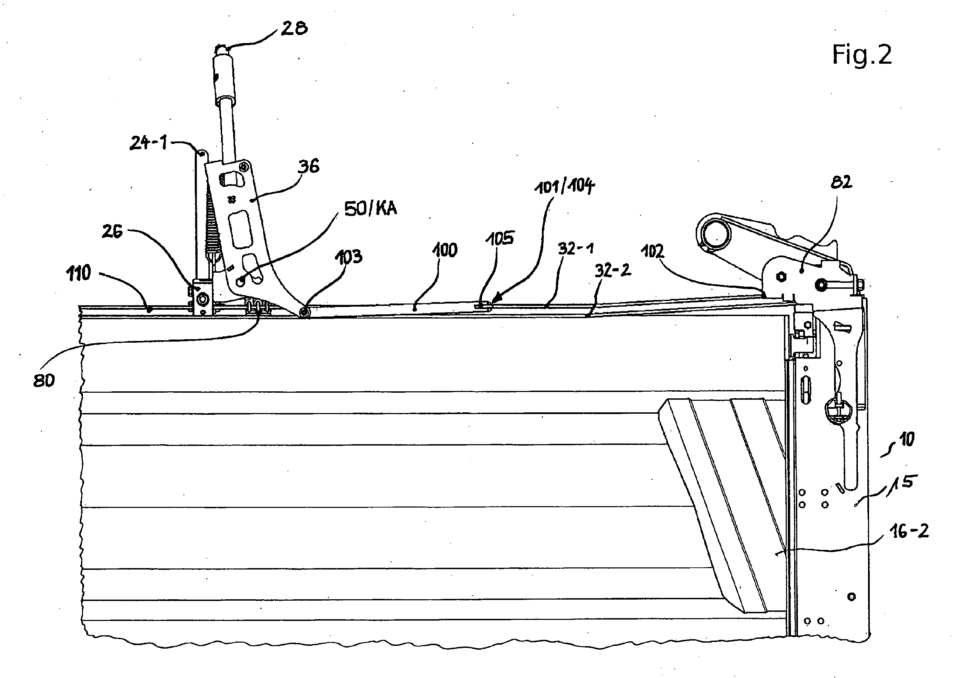

Fig. 2 zeigt in einer Ansicht eine erfindungsgemäße Ausführungsform der Verdeckvorrichtung in einer Stellung ohne Anschlagwirkung. Im Gegensatz zu der Verdeckvorrichtung nach Fig. 1 umfasst die erfindungsgemäße Ausführungsform eine Anschlagstange 100, die über ein drehbares Gelenk 103 mit der Hebeleinrichtung 36 verbunden ist. An dem von dem Drehgelenk 103 abgewandten Ende der Anschlagstange 100 ist eine Anschlagstangenführung 101 vorgesehen, die ein nicht dargestelltes Loch umfasst. Durch das Loch ist das Betätigungsseil 32-1 der Betätigungsvorrichtung gezogen. Dadurch ist die Anschlagstange 100 an dem Betätigungsseil 32-1 geführt. Ebenso wie in der Verdeckvorrichtung gemäß Fig. 1 sind die beiden Betätigungsseile 32-1 und 32-2 um eine nicht dargestellte Umlenkrolle in einem Umlenkrollenhalter 82 gelegt. Der Umlenkrollenhalter 82 ist an einer fest stehenden Ecksäule 15 befestigt. Das Führungselement 26 trägt einen nicht klappbaren Stützbügel 24-1 sowie den Klappbügel 28. An dem Führungselement 26 ist außerdem vorzugsweise eine Klemme für das Betätigungsseil 80 befestigt, so dass das Führungselement 26, der nicht klappbare Stützbügel 24-1 und der Klappbügel 28 mit der Hebeleinrichtung 36 sowie der Anschlagstange 100 mit dem Betätigungsseil 32-1 bewegt werden können. In der dargestellten Position berührt die Anschlagstange den Umlenkrollenhalter 82 an dessen Anschlagstelle 102 nicht. Die Anschlagstelle 102 ist an dem Umlenkrollenhalter 82 an einer Position vorgesehen, an der eine in der Fig. 2 nicht sichtbare Anschlagstelle 104 der Anschlagstange 100 anschlägt, wenn das Führungselement 26 ausreichend weit in der Fig. 2 nach rechts bewegt worden ist. Diese Bewegung entspricht einem Ausbreiten des Verdecks. Die Anschlagstange weist weiter einen Einfädelabschnitt 105 auf, der bei Annäherung an den Umlenkrollenhalter 82 dafür sorgt, dass die Anschlagstelle 102 am Umlenkrollenhalter mit der Anschlagstelle 104 der Anschlagstange 100 in Eingriff treten kann, indem der Umlenkrollenhalter 82 an einer Einfädelfläche des Einfädelabschnitts 105 in Richtung der Anschlagstelle 104 abgleitet. An der Anschlagstange 100 können mehrere Einfädelabschnitte vorgesehen sein, insbesondere kann zusätzlich zu dem dargestellten Einfädelabschnitt 105 ein zweiter nicht dargestellter Einfädelabschnitt auf der dem Betrachter abgewandten Seite der Anschlagstange 100 an gleicher Position in Längs- und Querrichtung der Anschlagstange 100 vorgesehen sein. In der gezeigten Position ist die Anschlagstange 100 im Wesentlichen horizontal ausgerichtet. Vorzugsweise liegt die Anschlagstange 100 im Wesentlichen parallel zu dem Betätigungsseil 32-1. Der Klappbügel 28 befindet sich in einer annähernd vertikalen Ebene. Der Stützbügel 24-1 befindet sich unabhängig von der Position des Klappbügels 28 in Bezug auf den Klappbügel 28 in Richtung der frontseitigen Bordwand des Transportbehälters 10. Das Führungselement 26 ist entlang einer Führung 110 am oberen Rand der Bordwand 16-2 geführt.

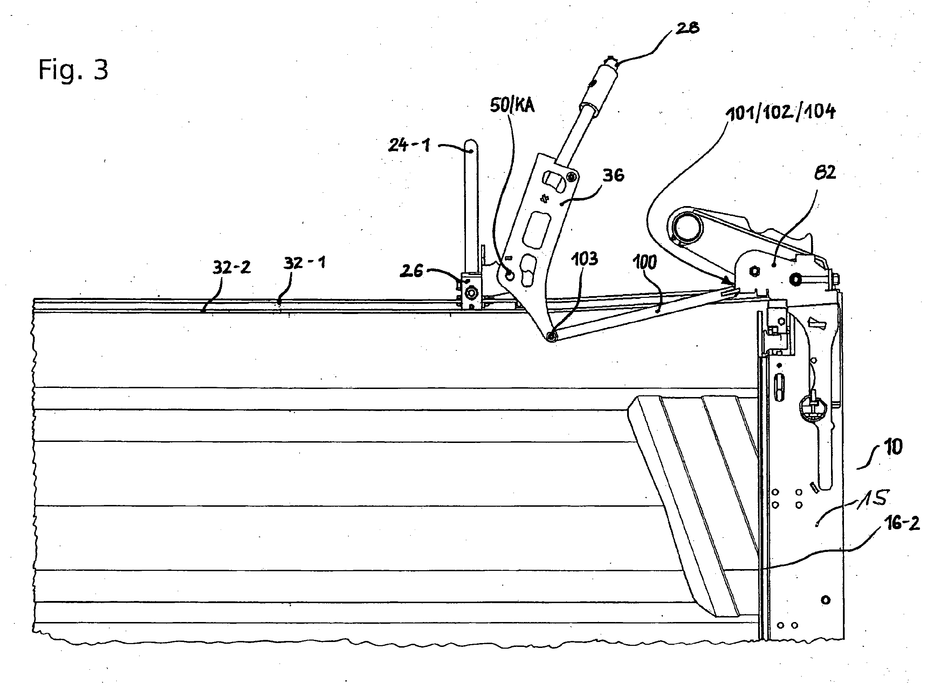

Fig. 3 zeigt eine Ansicht der erfindungsgemäßen Ausführungsform der Verdeckvorrichtung in einer Position, in der die Anschlagstange 100 in Anschlagwirkung mit dem Umlenkrollenhalter 82 steht. Das Führungselement 26 ist im Vergleich zu der Fig. 2 in der Fig. 3 nach rechts vorgeschoben. Durch die Anschlagwirkung ist der Klappbügel 28 aus seiner vertikalen Stellung etwas nach rechts heruntergeklappt. Dementsprechend ist die Hebeleinrichtung 36 über das Drehgelenk 103 von der Anschlagstange 100 angelenkt. Das Drehgelenk 103 ist im Vergleich zur Fig. 2 nach unten und in horizontaler Richtung zum frontseitigen Ende des Transportbehälters 10 hin verschoben. Um diese Bewegung auszugleichen, ist die Anschlagstange 100 im Vergleich zu ihrer Position in Fig. 2 verkippt. Dadurch ergibt sich eine gleitende Drehbewegung zwischen den Anschlagstellen 102 des Rollenhalters und 104 der Anschlagstange 100. Um von der Position in Fig. 2 zu der Position in Fig. 3 zu gelangen, wird das Betätigungsseil 32-2 in der Fig. 3 nach links gezogen, wodurch über die nicht dargestellte Umlenkrolle bewirkt wird, dass das Betätigungsseil 32-1 nach rechts bewegt wird. Wie in Fig. 2 erkennbar, ist das Führungselement 26 über die Seilklemme 80 mit dem Betätigungsseil 32-1 verbunden, so dass das Führungselement 26 ebenfalls nach rechts bewegt wird.

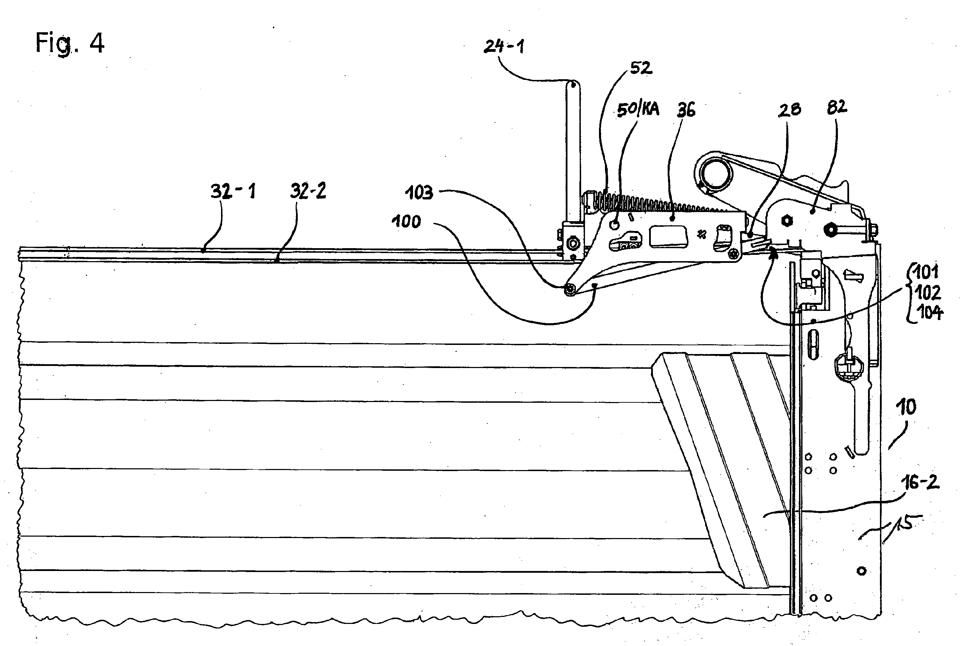

Fig. 4 zeigt eine Ansicht der erfindungsgemäßen Ausführungsform der Verdeckvorrichtung in einer Position, in der der Klappbügel 28 vollständig heruntergeklappt ist. Die Verdeckplane ist somit vollständig über den Transportbehälter 10 ausgebreitet. Im Vergleich zu der Fig. 2 ist das Führungselement 26 weiter nach rechts verschoben, wodurch die Hebeleinrichtung 36 zusammen mit dem Klappbügel 28 weiter im Uhrzeigersinn gedreht ist. Dies wird durch noch weitere Anlenkung der Hebeleinrichtung 36 über das Drehgelenk 103 mittels der Anschlagstange 100 bewirkt. Der Abschnitt der Hebeleinrichtung 36 mit dem Drehgelenk 103, der in den Figuren 2 bis 4 unterhalb des Drehlagers 50 angeordnet ist, ist in der Position, die in Fig. 4 gezeigt ist, über eine Position, in der das Drehgelenk 103 im Wesentlichen senkrecht unterhalb der Klappachse KA steht, hinaus ausgelenkt, so dass das Drehgelenk 103 wieder weiter oben angeordnet ist. Die Anschlagstange 100 hat daher eine ähnliche Neigung wie in der Fig. 3, hat jedoch auf dem Weg in diese Position weitere Drehbewegung an seinen Enden auszugleichen. Der Klappbügel 28 liegt auf der Heckbordwand auf. In Fig. 4 und auch in Figur 2 ist eine Zugfeder 52 gezeigt, die zwischen der Hebeleinrichtung 36 und einem Abschnitt des Führungselements 26 gespannt ist. Diese Feder bewirkt, dass der Klappbügel 28 in Richtung seiner hochgeklappten Stellung vorgespannt ist. Somit werden mit der Zugfeder 52 Kräfte von dem Führungselement 26 auf den Klappbügel übertragen, welche wiederum über die Hebeleinrichtung 36 und die Anschlagstange 100 an dem Umlenkrollenhalter 82 abgestützt werden. Die Zwangsführung des Klappbügels 28 findet somit über das Hebelelement 36, die Anschlagstange 100 und den Umlenkrollenhalter 82 statt, die verhindern, dass der Klappbügel hochklappt.

## Patentansprüche

1. Verdeckvorrichtung für einen Lastentransportbehälter (10) eines Lastentransportfahrzeugs, der einen von einer Heckbordwand und von Seitenbordwänden (16-1, 16-2) begrenzten Laderaum aufweist, wobei wenigstens eine dieser Bordwände um eine normalerweise horizontale Schwenkachse (PA) aus einer Verschlussstellung heraus nach außen in eine Öffnungsstellung verschwenkbar ist,
umfassend eine Verdeckplane und eine Betätigungsvorrichtung (32-1, 32-2, 80, 81, 82) für die Verdeckplane, wobei im bestimmungsgemäß und funktionsfertig am Lastentransportbehälter (10) montierten Zustand der Verdeckvorrichtung die Verdeckplane mittels der Betätigungsvorrichtung (32-1, 32-2, 80, 81, 82) zwischen einer ausgebreiteten Abdeckstellung und einer gerafften Einzugsstellung am Lastentransportbehälter (10) bewegbar ist, so dass sie in der ausgebreiteten Abdeckstellung den Laderaum des Lastentransportbehälters (10) an dessen Oberseite abdeckt und in der gerafften Einzugsstellung an einer Einzugsseite des Lastentransportbehälters (10) in einer den Laderaum an dessen Oberseite freigebenden Weise aufbewahrt ist, wobei die Betätigungsvorrichtung (32-1, 32-2, 80, 81, 82) nebeneinander liegend verschiebbar an dem Lastentransportbehälter (10) angeordnete und mit der Verdeckplane verbundene Stützbügel (24, 24-1, 24-2, 24-3) für die Verdeckplane aufweist, die an ihren entgegengesetzten Enden Führungselemente (26) zu ihrer Führung (110) an den oberen Rändern (20-1, 20-2) und in Längsrichtung (L) der Seitenbordwände (16-1, 16-2) des Lastentransportbehälters (10) haben, wobei die Stützbügel (24, 24-1, 24-2, 24-3) in Längsrichtung (L) der Seitenbordwände (16-1, 16-2) einander angenähert in einer Sammelstellung an der Einzugseite des Lastentransportbehälters (10) zusammengeführt sind, wenn die Verdeckplane in der Einzugstellung ist, wohingegen die Stützbügel (24, 24-1, 24-2, 24-3) auseinandergezogen und mit größeren Abständen (A) voneinander an der Oberseite des Lastentransportbehälters (10) in Längsrichtung (L) der Seitenbordwände (16-1, 16-2) verteilt sind, wenn die Verdeckplane in ihrer ausgebreiteten Abdeckstellung ist,
wobei die Betätigungsvorrichtung (32-1, 32-2, 80, 81, 82) einen ebenfalls mit der Verdeckplane verbundenen Klappbügel (28) umfasst, welcher im Bereich der Führungselemente (26) des der Heckbordwand am nächsten liegenden ersten Stützbügels (24-1) abgestützt ist und relativ zu diesem Stützbügel (24-1) um eine zur Längsrichtung (L) der Seitenbordwände (16-1, 16-2) im Wesentlichen orthogonale und normalerweise horizontale Klappachse (KA) beweglich ist zwischen einer hochgeklappten und einer heruntergeklappten Stellung, wobei sich der Klappbügel (28) in ausgebreiteter Abdeckstellung der Verdeckplane in seiner heruntergeklappten Stellung befindet und einem oberen Rand der Heckbordwand angenähert ist oder auf dieser aufliegt und die Verdeckvorrichtung eine starre Anschlageinrichtung (100, 102, 91, 92) für eine Herunterklappbewegung des Klappbügels (28) aufweist, wobei die Anschlageinrichtung (100, 102, 91, 92) unmittelbar oder über Zwischenelemente mit einer Heckbordwand oder Seitenbordwand (16-1, 16-2) verbunden ist, und wobei eine Bewegung des Klappbügels (28) entlang der Führung (110) in Richtung der ausgebreiteten Abdeckstellung die Anschlageinrichtung (100, 102, 91, 92) durch Anschlagskrafteinleitung in den Klappbügel (28) ein zwangsgeführtes Herunterklappen des Klappbügels (28) bewirkt, wobei das Herunterklappen starr mit der Bewegung des Klappbügels (28) entlang der Führung (110) gekoppelt ist, **dadurch gekennzeichnet, dass**
die starre Anschlageinrichtung (100, 102) eine Anschlagstange (100) umfasst,
die Anschlagstange (100) entlang einer Anschlagstangenführung (32-1, 110) geführt ist, mittels der die Anschlagstange (100) zu einer Anschlagstelle (102) führbar ist,
und die Anschlagstangenführung (32-1, 110) ein Element der Betätigungsvorrichtung (32-1, 32-2, 80, 81, 82) für die Verdeckplane umfasst.

2. Verdeckvorrichtung nach Anspruch 1, **dadurch gekennzeichnet, dass** die starre Anschlageinrichtung (100, 102) dazu eingerichtet ist, in eine Hebeleinrichtung des Klappbügels, die der Verdeckplane in Bezug auf die Klappachse (KA) des Klappbügels (28) abgewandt ist, Anschlagkräfte einzuleiten.

3. Verdeckvorrichtung nach Anspruch 1 oder Anspruch 2, **dadurch gekennzeichnet, dass** die Anschlagsstangenführung (32-1, 110) ein Betätigungsseil (32-1, 32-2) umfasst.

4. Verdeckvorrichtung nach einem der vorangehenden Ansprüche, **gekennzeichnet durch** ein Federelement (52), das dazu eingerichtet ist, den Klappbügel (28) in seine hochgeklappte Stellung zu drängen.

5. Lastentransportbehälter (10) mit einer Verdeckvorrichtung nach einem der vorangehenden Ansprüche.

6. Lastentransportbehälter (10) nach Anspruch 5, **dadurch gekennzeichnet, dass** eine Verdeckvorrichtung mit zwei starren Anschlageinrichtungen (100, 102) für eine Herunterklappbewegung des Klappbügels (28) an zwei einander gegenüberliegenden Seiten, insbesondere an den Seitenbordwänden (16-1, 16-2), des Transportbehälters (10) angeordnet ist.

7. Lastentransportfahrzeug mit einer Verdeckvorrichtung nach einem der Ansprüche 1 bis 4 oder mit einem Lastentransportbehälter (10) nach einem der Ansprüche 5 oder 6.

## Claims

1. Folding top device for a load transport container (10) of a load transport vehicle which has a cargo space delimited by a rear wall and by side walls (16-1, 16-2), it being possible to pivot at least one of said walls outwards about a typically horizontal pivot axis (PA) out of a closed position and into an open position, said folding top device comprising a cover tarpaulin and an actuating device (32-1, 32-2, 80, 81, 82) for the cover tarpaulin, it being possible, when the folding top device is mounted on the load transport container (10) as intended and in a manner ready for operation, to move the cover tarpaulin on the load transport container (10) between an outstretched cover position and a gathered retracted position by means of the actuating device (32-1, 32-2, 80, 81, 82) such that, when in the outstretched cover position, said tarpaulin covers the top of the cargo space of the load transport container (10), and, when in the gathered retracted state, is stored on a retraction side of the load transport container (10) such that it frees the top of the cargo space, the actuating device (32-1, 32-2, 80, 81, 82) comprising adjacent support brackets (24, 24-1, 24-2, 24-3) which are intended for the cover tarpaulin, are displaceably arranged on the load transport container (10), are connected to the cover tarpaulin and have guide elements (26) on their opposite ends such that they can be guided (110) on the upper edges (20-1, 20-2) and in the longitudinal direction (L) of the side walls (16-1, 16-2) of the load transport container (10), the support brackets (24, 24-1, 24-2, 24-3) being guided so as to be brought closer together, in the longitudinal direction (L) of the side walls (16-1, 16-2), into a collected position on the retraction side of the load transport container (10) when the cover tarpaulin is in the retracted position, whereas the support brackets (24, 24-1, 24-2, 24-3) are pulled apart and distributed at relatively large distances (A) from one another on the top of the load transport container (10) in the longitudinal direction (L) of the side walls (16-1, 16-2) when the cover tarpaulin is in its outstretched cover position, the actuating device (32-1, 32-2, 80, 81, 82) comprising a folding bracket (28) which is likewise connected to the cover tarpaulin, is supported in the region of the guide elements (26) of the first support bracket (24-1) which is closest to the rear wall and can move relative to said support bracket (24-1) about a typically horizontal fold axis (KA) which is substantially orthogonal to the longitudinal direction (L) of the side walls (16-1, 16-2) between a folded-up position and an unfolded position, the folding bracket (28) being in its unfolded position when the cover tarpaulin is in the outstretched cover position and being brought closer to an upper edge of the rear wall or abutting said wall, and the folding top device having a rigid stop apparatus (100, 102, 91, 92) for an unfolding movement of the folding bracket (28), the stop apparatus (100, 102, 91, 92) being connected to a rear wall or side wall (16-1, 16-2) either directly or by means of intermediate elements, and a movement of the folding bracket (28) along the guide (110) in the direction of the outstretched cover position causing the stop apparatus (100, 102, 91, 92) to unfold the folding bracket (28) in a positively guided manner by applying stopping forces to the folding bracket (28), the unfolding being rigidly linked to the movement of the folding bracket (28) along the guide (110), **characterised in that** the rigid stop apparatus (100, 102) comprises a stop rod (100), and the stop rod (100) is guided along a stop rod guide (32-1, 110), by means of which the stop rod (100) can be guided to a stop position (102), and the stop rod guide (32-1, 110) comprises an element of the actuating device (32-1, 32-2, 80, 81, 82) for the cover tarpaulin.

2. Folding top device according to claim 1, **characterised in that** the rigid stop apparatus (100, 102) is designed to apply stopping forces to a lever apparatus of the folding bracket which faces away from the cover tarpaulin with regard to the fold axis (KA) of the folding bracket (28).

3. Folding top device according to either claim 1 or claim 2, **characterised in that** the stop rod guide (32-1, 110) has an actuating cable (32-1, 32-2).

4. Folding top device according to any of the preceding claims, **characterised by** a spring element (52) which is designed to forcibly push the folding bracket (28) into its folded-up position.

5. Load transport container (10) comprising a folding top device according to any of the preceding claims.

6. Load transport container (10) according to claim 5, **characterised in that** a folding top device having two rigid stop apparatuses (100, 102) provided for an unfolding movement of the folding bracket (28) is arranged on two opposite sides, in particular on the side walls (16-1, 16-2) of the transport container (10).

7. Load transport vehicle comprising a folding top device according to any of claims 1 to 4 or comprising a load transport container (10) according to either claim 5 or claim 6.

## Revendications

1. Dispositif de capote pour un contenant de transport de charges (10) d'un véhicule de transport de charges, lequel présente un espace de chargement délimité par une ridelle arrière et des ridelles latérales (16-1, 16-2), dans lequel au moins l'une de ces ridelles peut pivoter vers l'extérieur autour d'un axe normalement horizontal à partir d'une position de fermeture vers une position d'ouverture,
comprenant une bâche de capote et un dispositif d'actionnement (32-1, 32-2, 80, 81, 82) pour la bâche de capote, dans lequel, à l'état de montage conforme et prêt à fonctionner sur le contenant de transport de charges (10) du dispositif de capote, la bâche de capote peut être déplacée au moyen du dispositif d'actionnement (32-1, 32-2, 80, 81, 82) entre une position de recouvrement déployée et une position de retrait serrée sur le contenant de transport de charges (10) de manière à ce que, dans la position de recouvrement déployée, elle recouvre l'espace de chargement du contenant de transport de charges (10) au niveau du côté supérieur de celui-ci et que, dans la position de retrait serrée, elle soit stockée au niveau d'un côté de retrait du contenant de transport de charges (10) d'une manière à libérer l'espace de charge sur le côté supérieur de celui-ci, dans lequel le dispositif d'actionnement (32-1, 32-2, 80, 81, 82) présente des arceaux de support (24, 24-1, 24-2, 24-3) pour la bâche de capote disposés les uns à côté des autres de manière à pouvoir coulisser sur le contenant de transport de charges (10) et reliés à la bâche de capote, lesquels ont des éléments de guidage (26) à leurs extrémités opposées pour leur guidage (110) au niveau des bords supérieurs (20-1, 20-2) et en direction longitudinale (L) des ridelles latérales (16-1, 16-2) du contenant de transport de charges (10), dans lequel les arceaux de support (24, 24-1, 24-2, 24-3) sont réunis en direction longitudinale (L) des ridelles latérales (16-1, 16-2) en étant rapprochés les uns des autres dans une position de collecte du côté de retrait du contenant de transport de charges (10) lorsque la bâche de capote est dans la position de retrait, alors que les arceaux de support (24, 24-1, 24-2, 24-3) sont étirés et répartis avec des distances (A) plus grandes les uns par rapport aux autres sur le côté supérieur du contenant de transport de charges (10) en direction longitudinale (L) des ridelles latérales (16-1, 16-2), lorsque la bâche de capote est dans sa position de recouvrement déployée,
dans lequel le dispositif d'actionnement (32-1, 32-2, 80, 81, 82) comprend un arceau rabattable (28) également relié à la bâche de capote, lequel est en appui dans la zone des éléments de guidage (26) du premier arceau de support (24-1) situé le plus près de la ridelle arrière et est mobile par rapport à cet arceau de support (24-1) autour d'un axe de rabattement (KA) sensiblement orthogonal à la direction longitudinale (L) des ridelles latérales (16-1, 16-2) et normalement horizontal entre une position relevée et une position rabattue, dans lequel l'arceau rabattable (28) se trouve dans sa position rabattue dans la position de recouvrement déployée de la bâche de capote et est rapproché d'un bord supérieur de la ridelle arrière ou repose sur celle-ci et le dispositif de capote présente un dispositif de butée rigide (100, 102, 91, 92) pour un mouvement de rabattement de l'arceau rabattable (28), dans lequel le dispositif de butée (100, 102, 91, 92) est relié directement ou par l'intermédiaire d'éléments intermédiaires à une ridelle arrière ou une ridelle latérale (16-1, 16-2), et dans lequel un déplacement de l'arceau rabattable (28) le long du guidage (110) en direction de la position de recouvrement déployée le dispositif de butée (100, 102, 91, 92) provoque un rabattement à guidage forcé de l'arceau rabattable (28) par introduction d'une force de butée dans l'arceau rabattable (28), dans lequel le rabattement est couplé de manière rigide au déplacement de l'arceau rabattable (28) le long du guidage (110),
**caractérisé en ce que**
le dispositif de butée rigide (100, 102) comprend une tige de butée (100),
la tige de butée (100) est guidée le long d'un guidage de tige de butée (32-1, 110) au moyen duquel la tige de butée (100) peut être guidée vers un emplacement de butée (102),
et le guidage de tige de butée (32-1, 110) comprend un élément du dispositif d'actionnement (32-1, 32-2, 80, 81, 82) pour la bâche de capote.

2. Dispositif de capote selon la revendication 1, **caractérisé en ce que** le dispositif de butée rigide (100, 102) est étudié pour introduire des forces de butée dans un dispositif à levier de l'arceau rabattable, lequel tourne le dos à la bâche de capote par rapport à l'axe de rabattement (KA) de l'arceau rabattable (28).

3. Dispositif de capote selon la revendication 1 ou la revendication 2, **caractérisé en ce que** le guidage de tige de butée (32-1, 110) comprend une corde d'actionnement (32-1, 32-2).

4. Dispositif de capote selon l'une des revendications précédentes, **caractérisé par** un élément de ressort (52) qui est étudié pour repousser l'arceau rabattable (28) dans sa position relevée.

5. Contenant de transport de charges (10) avec un dispositif de capote selon l'une des revendications précédentes.

6. Contenant de transport de charges (10) selon la revendication 5, **caractérisé en ce qu'**un dispositif de capote avec deux dispositifs de butée rigides (100, 102) pour un mouvement de rabattement de l'arceau rabattable (28) est disposé sur deux côtés situés en vis-à-vis l'un de l'autre, en particulier sur les ridelles latérales (16-1, 16-2) du contenant de transport (10).

7. Véhicule de transport de charges avec un dispositif de capote selon l'une des revendications 1 à 4 ou avec un contenant de transport de charges (10) selon l'une des revendications 5 ou 6.
